# EUROPÄISCHE PATENTSCHRIFT

(11) **EP 4 139 401 B1**
(45) Veröffentlichungstag und Bekanntmachung des Hinweises auf die Patenterteilung: **11.09.2024**
(21) Anmeldenummer: 21722148.0
(22) Anmeldetag: 23.04.2021
(51) Int. Cl.: C08L 101/10, C09J 171/02, C09J 201/10

(54) **REAKTIVE HEISSSCHMELZKLEBSTOFFZUSAMMENSETZUNGEN BASIEREND AUF ALPHA-SILAN-TERMINIERTEN ORGANISCHEN POLYMEREN**
REACTIVE HOT-MELT ADHESIVE COMPOSITION BASED ON ALPHA-SILANE-TERMINATED ORGANIC POLYMERS
COMPOSITION ADHÉSIVE THERMOFUSIBLE RÉACTIVE À BASE DE POLYMÈRES ORGANIQUES À TERMINAISON ALPHA-SILANE

(30) Priorität: 24.04.2020 DE 102020111278
(43) Veröffentlichungstag der Anmeldung: 01.03.2023
(73) Patentinhaber: Kleiberit SE & Co. KG, 76356 Weingarten (DE)
(72) Erfinder: BECKER-WEIMANN, Klaus, 76530 Baden-Baden (DE); FRANK, Patrick, 76149 Karlsruhe (DE); WUNDERLICH, Steffen, 69126 Heidelberg (DE)
(74) Vertreter: Büchel, Edwin
(86) Internationale Anmeldenummer: PCT/EP2021/060661
(87) Internationale Veröffentlichungsnummer: WO 2021/214290

(56) Entgegenhaltungen:
- EP-A1- 2 610 278
- WO-A1-2010/115715
- WO-A1-2014/018349

## Beschreibung

Die vorliegende Erfindung betrifft reaktive Heißschmelzklebstoffzusammensetzungen. Die Erfindung betrifft weiterhin Verfahren zu deren Herstellung sowie ein Verfahren zur Flächenkaschierung unter Verwendung der Zusammensetzung.

Reaktive Schmelzklebstoffe nehmen aufgrund ihrer Vorteile, wie zum Beispiel einer kurzen Abbindezeit, hohen Anfangsfestigkeit und Beständigkeit, einen großen Marktanteil ein, werden vielseitig eingesetzt und haben in vielen Anwendungen lösungsmittelhaltige Klebstoffe ersetzt (siehe z.B. Bodo Müller, Walter Rath, Formulierung von Kleb- und Dichtstoffen, Vincentz Network; 1. Auflage, Dezember 2004).

WO 2014/018349 A1 beschreibt eine silanreaktive Schmelzklebstoffzusammensetzung, umfassend ein silanmodifiziertes Polymer und 0,1 % bis 15 % säurefunktionelles Wachs, wobei das silanmodifizierte Polymer eine Grundgerüststruktur aufweisen kann, die aus Polyurethan, Polyether, Polyester, Polyacrylat oder Polyolefin ausgewählt ist und wobei das silanmodifizierte Polymer bei Raumtemperatur flüssig ist und mindestens eine Silylgruppe mit der Formel A-Si(CₓH₂ₓ₊₁)ₙ(OC_{y}H_{2y+1})₃₋ₙ umfasst, wobei A eine Bindung an das silanmodifizierte Polymergerüst, x 1 bis 12, y 1 bis 12 und n 0, 1 oder 2 ist.

Wichtigster Vertreter unter den reaktiven Schmelzklebstoffen stellen feuchtigkeitsvernetzende Polyurethane auf Basis von Methylendiphenyldiisocyanat (MDI) dar. Der Umgang mit monomerem MDI wurde aufgrund seiner sensibilisierenden Wirkung in der jüngsten Vergangenheit unter REACH beschränkt, wie aus der EU-Verordnung 2020/1149 hervorgeht.

In der Patentliteratur werden Verfahren zur Herstellung von monomerarmen reaktiven Polyurethanschmelzklebstoffen auf Basis von MDI beschrieben (siehe beispielsweise WO 03/055929 A1, WO 01/40342 A1, WO 03/033562 A1, WO 03/006521 A1).

Es werden des Weiteren Verfahren zur Silanisierung von Polyurethanschmelzklebstoffen beschrieben, die eine isocyanatfreie Alternative darstellen. Bei diesem Verfahren werden in der Regel feuchtigkeitsvernetzende Di- bzw. Trialkoxysilaneinheiten eingeführt. Eine Möglichkeit zur Herstellung stellt die Umsetzung der Isocyanatgruppen reaktiver Polyurethanschmelzklebstoffe mit sekundären Aminosilanen dar (z. B. WO 2004/005420 A1). Zur Beschleunigung der Vernetzungsreaktion werden in der Regel Aminosilane, Zinnbeschleuniger und/
oder starke Stickstoffbasen (z. B. 1,8-Diazabicyclo[5.4.0]undec-7-en) eingesetzt. Nachteil dieses Verfahrens ist, dass diese Beschleuniger gleichzeitig die Hydrolyse der in reaktiven Polyurethanschmelzklebstoffen meist enthaltenen Estereinheiten fördern können. Auch sind die so erhaltenen Formulierungen in der Regel nicht mehr ausreichend stabil, um auf Walzenauftragsmaschinen verarbeitet werden zu können. Reaktive Schmelzklebstoffe werden häufig über Walzenauftragsmaschinen verarbeitet und sind oftmals der Umgebungsfeuchte ausgesetzt. Die Formulierungen müssen demzufolge ausreichend stabil sein und dürfen auch bei kurzzeitigen Anlagenstillständen nicht so weit mit der Umgebungsfeuchte reagieren, dass ein signifikanter Anstieg der Auftragsmenge und ein Fadenzug entstehen, wobei letzterer das Auftragsbild negativ beeinträchtigt.

Stabile Schmelzklebstoffformulierungen auf Basis Silan-terminierter Polymere stellen eine interessante Klebstoffklasse dar. Des Weiteren haben solche silanfunktionellen Klebstoffe ein breites Haftungsspektrum, was beispielsweise im Vergleich zu isocyanatvernetzenden Systemen einen Vorteil darstellen kann. Da bei silanterminierten Polymeren eine Silangruppe in der Regel zwei bis drei Kondensationsreaktionen eingehen kann, ist auch eine höhere Vernetzungsdichte zu strukturell vergleichbaren isocyanatbasierten Bindemitteln möglich. Hierbei wäre es vorteilhaft, dass diese sich unter anderem prozesssicher bei hohen Temperaturen zum Teil über Auftragswalzen verarbeiten lassen und eine für diese Anwendung typisch hohe Anfangshaftung sowie eine für industrielle Anwendungen akzeptable chemische Durchhärtung aufweisen.

Im Zuge dieser Entwicklung wurden zur Herstellung Silan-basierter Formulierungen zwei Wege verfolgt. Neben der oben näher beschriebenen Silanisierung bestehender reaktiver PUR Schmelzklebstoffe, bei der deren Isocyanatgruppen mit sekundären Aminosilanen chemisch umgesetzt werden, erfolgt zum anderen eine Formulierung kommerziell erhältlicher Silanbindemittel mit kristallinen oder amorphen Harzen zur Realisierung einer hohen Anfangshaftung.

So beschreibt zum Beispiel WO 2007/074143 A1 feuchtigkeitshärtende Heißschmelzklebstoffzusammensetzungen mit Hilfe silanfunktionalisierter Polyurethanprepolymere.

WO 2013/026654 A1 beschreibt vernetzbare Massen auf Basis von Organyloxysilan-terminierten Polymeren. Hierbei werden ebenso wie in DE 10 2013 213 835 A1 Abmischungen aus alpha-Silanen, wie zum Beispiel Geniosil^{®} STP-E10 und Siliconharzen beschrieben.

WO 2011/087741 A2 beschreibt Klebstoffe zum Binden von Büchern und verwandten Gegenständen und die Herstellung solcher Klebstoffe mit Silan-modifizierten flüssigen Polymeren. Insbesondere sollen die Klebstoffe einen verringerten Gehalt an monomeren Diisocyanaten oder keinen Gehalt an monomeren Diisocyanaten aufweisen.

Das Resultat war in beiden Fällen zunächst nicht zufriedenstellend. Die erhaltenen Formulierungen hatten eine zu geringe Anfangshaftung, waren nicht walzenstabil oder zu langsam durchhärtend.

Zur Verbesserung der Anfangshaftung kommen unter anderem Polyester- und Polyacrylatharze in Betracht. Bei Polyesterharzen besteht die Gefahr des Abbaus durch Hydrolyse, welche durch die für Silanklebstoffe typischen Beschleuniger, wie zum Beispiel durch Aminosilane, katalysiert wird. Geeignete kristalline Polyacrylatharze müssen dagegen bei sehr hohen Temperaturen (ca. 150 °C) aufgeschmolzen werden. Bei diesen Temperaturen sind kommerziell erhältliche polyetherbasierende Silanbindemittel jedoch nicht stabil.

Eine Aufgabe der vorliegenden Erfindung war daher, reaktive Schmelzklebstoffzusammensetzungen bereitzustellen, die die oben genannten Nachteile nicht oder zumindest in geringerem Maße aufweisen.

Die Aufgabe wurde gelöst durch eine reaktive Heißschmelzklebstoffzusammensetzung bezogen auf das Gesamtgewicht der Zusammensetzung enthaltend
a) 3 Gew.-% bis 49 Gew.-% mindestens eines alpha-Silan-terminierten organischen Polymers;
b) 1 Gew.-% bis weniger als 20 Gew.-%, vorzugsweise 1 Gew.-% bis 10 Gew.-%, mindestens eines Acrylatharz basierten Polymers;
c) 1 Gew.-% bis 20 Gew.-%, vorzugsweise 1 Gew.-% bis 10 Gew.-%, mindestens einer zumindest bei 100 °C flüssigen chemischen Verbindung, in der sich zumindest bei 150 °C das mindestens eine Acrylatharz basierte Polymer löst;
d) 0,001 Gew.-% bis 5 Gew.-%, vorzugsweise 0,001 Gew.-% bis 1 Gew.-%, mindestens eines niedermolekularen Silans, das eine primäre oder sekundäre Aminogruppe oder eine geblockte Aminogruppe, die zu der primären oder sekundären Aminogruppe hydrolysiert, aufweist.

Die Aufgabe wurde ebenfalls gelöst durch ein Verfahren zur Herstellung einer reaktiven Heißschmelzklebstoffzusammensetzung nach der vorliegenden Erfindung die Schritte enthaltend
(a) Hinzufügen von mindestens einem Acrylatharz basierten Polymer zu mindestens einer zumindest bei 100 °C flüssigen chemischen Verbindung, in der sich zumindest bei 150 °C das mindestens eine Acrylatharz basierte Polymer löst, oder Hinzufügen zu einer Mischung, die die mindestens eine chemische Verbindung enthält, bei einer Temperatur im Bereich von 130 °C bis 170 °C;
(b) Abkühlen der Mischung auf eine Temperatur im Bereich von 80°C bis 120 °C;
(c) Hinzufügen mindestens eines alpha-silan-terminierten organischen Polymers zu der abgekühlten Mischung;
(d) Hinzufügen mindestens eines niedermolekularen Silans, das eine primäre oder sekundäre Aminogruppe oder eine geblockte Aminogruppe, die zu der primären oder sekundären Aminogruppe hydrolysiert, aufweist, wobei eine reaktive Heißschmelzklebstoffzusammensetzung nach der vorliegenden Erfindung erhalten wird.

Die Aufgabe wurde ebenfalls gelöst durch ein Verfahren zur Flächenkaschierung den Schritt des Auftragens einer reaktiven Heißschmelzklebstoffzusammensetzung nach der vorliegenden Erfindung auf einem Substrat mit Hilfe einer Auftragswalze enthaltend.

Die Anforderung eines walzenstabilen Klebstoffes bei Verarbeitungstemperaturen von 100-120 °C mit einer vertretbaren Durchhärtungsgeschwindigkeit konnte überraschenderweise mit Bindemitteln auf Basis silanterminierter Polymere (sogenannte alpha-Silane) realisiert werden, wobei ein Acrylatharz basiertes Polymer zum Einsatz kommen konnte, das mit Hilfe einer zumindest bei 100 °C flüssigen chemischen Verbindung zumindest bei 150 °C gelöst werden kann, sowie mit Hilfe mindestens eines niedermolekularen Silans, das eine primäre oder sekundäre Aminogruppe oder eine geblockte Aminogruppe, die zu der primären oder sekundären Aminogruppe hydrolysiert, aufweist. Auf diese Weise konnten hydrolysestabile Formulierungen mit einer zufriedenstellenden Anfangshaftung hergestellt werden. Des Weiteren weisen die erfindungsgemäßen reaktiven Heißschmelzklebstoffzusammensetzungen hohe Vernetzungsdichten auf, was eine gute Weichmacherbeständigkeit begründen kann.

Dementsprechend stellt die reaktive Heißklebstoffzusammensetzung nach der vorliegenden Erfindung eine bei 100 °C niedrigviskose und weitgehend walzenstabile feuchtigkeitsvernetzende Klebstoffformulierung auf Basis alpha-Silan terminierter Polymere dar, die bei Raumtemperatur eine für Flächenkaschierungen ausreichend hohe Anfangshaftung aufweisen und chemisch hinreichend schnell durchhärten. Bei der Aushärtung wird durch eine Kondensationsreaktion Alkohol (insbesondere Methanol, ggf. auch Ethanol) unter Ausbildung von Siloxangruppen abgespalten.

Genauer betrachtet findet bei alpha-Silanen bekanntermaßen eine zweistufige Kondensationsreaktion von Alkoxysilanen durch das in alpha-Stellung zum Siliziumatom befindliche Donoratom (beispielsweise Stickstoffatom) weitgehend autokatalytisch statt (alpha-Effekt). Die reaktiven Heißschmelzklebstoffzusammensetzungen nach der vorliegenden Erfindung werden durch Aminosilane beschleunigt und kommen ohne den Einsatz weiterer Co-Katalysatoren wie zum Beispiel Zinnorganyle oder Diazabicycloundecen aus. Überraschenderweise hat sich im Zuge dieser Erfindung gezeigt, dass Formulierungen mit einem alpha-Silan über einen Zeitraum von ca. 30-60 Minuten bei 100 °C ohne Einhausung bei üblichem Raumklima (Raumtemperatur ca. ca. 20-23 °C, Raumluftfeuchte ca. 30-65 % r. LF.) walzenstabil sind und trotz der moderaten Beschleunigung und ohne den Einsatz weiterer Co-Katalysatoren chemisch hinreichend schnell durchhärten.

Die vorliegende Erfindung betrifft demgemäß eine reaktive Heißschmelzklebstoffzusammensetzung. Der Begriff "Heißschmelzklebstoff" umschreibt dabei einen Klebstoff, der bei Raumtemperatur fest ist bzw. ein hohes Schubmodul aufweist und bei erhöhter Temperatur, meist bei einer Temperatur von 100 °C bis 120 °C in flüssiger Form vorliegt. In flüssiger Form werden Heißschmelzklebstoffe appliziert und erstarren wieder, so dass diese bei Raumtemperatur wieder in fester Form vorliegen bzw. ein hohes Schubmodul aufweisen. Darüber hinaus zeichnen sich "reaktive" Heißschmelzklebstoffe dadurch aus, dass diese durch chemische Reaktion vernetzten. Hierbei erfolgt meist eine Reaktion mit Wasser, das beispielsweise als Luftfeuchtigkeit mit dem Heißschmelzklebstoff in Kontakt kommt. Diese werden daher als feuchtigkeitsvernetzend bezeichnet. Dies trifft auch auf die reaktiven Heißklebstoffzusammensetzungen der vorliegenden Erfindung zu.

Die reaktive Heißklebstoffzusammensetzung der vorliegenden Erfindung ist ebenfalls bei einer Temperatur von 100 °C bis 120 °C flüssig. Hierbei weisen diese üblicherweise eine Viskosität von 4000 mPas bis 12000 mPas auf. Vorzugsweise ist erfindungsgemäße reaktive Heißklebstoffzusammensetzung isocyanatfrei.

Die reaktive Heißschmelzklebstoffzusammensetzung nach der vorliegenden Erfindung enthält die Komponenten a) bis d). Darüber hinaus kann die erfindungsgemäße Zusammensetzung weitere Bestandteile aufweisen. Dementsprechend betrifft eine Ausführungsform der vorliegenden Erfindung eine reaktive Heißschmelzklebstoffzusammensetzung, die aus den Komponenten a) bis d) besteht. Eine weitere Ausführungsform der vorliegenden Erfindung betrifft eine reaktive Heißschmelzklebstoffzusammensetzung, die neben den Komponenten a) bis d) weiterhin eine oder mehrere, wie zwei, drei, vier, fünf, sechs, sieben, acht, neun oder zehn Komponenten aufweist.

Komponente a) der erfindungsgemäßen reaktiven Heißschmelzklebstoffzusammensetzung stellt mindestens ein alpha-Silan-terminiertes organisches Polymer dar. Demzufolge kann die reaktive Heißschmelzklebstoffzusammensetzung nach der vorliegenden Erfindung ein alpha-Silan-terminiertes Polymer aufweisen oder mehrere, wie zwei, drei oder vier, Polymere. Hierbei ist für den zuständigen Fachmann klar, dass Polymere keine Reinstoffe darstellen, sondern herstellungsbedingt als Stoffgemisch mit einer charakteristischen Stoffverteilung auftreten und dass daher "ein Polymer" vereinfachend für dieses Stoffgemisch steht.

Alpha-Silan-terminierte organische Polymere sind dem Fachmann bekannt und können beispielsweise kommerziell erhalten werden. So vertreibt die Firma Wacker Chemie AG, München (DE) solche alpha-Silan modifizierten Polymere unter der Bezeichnung Geniosil^{®}, wie Geniosil^{®} STP-E10 oder Geniosil^{®} XB 502.

Alpha-Silane kennzeichnen sich durch den so genannten alpha-Effekt. Bei diesem bewirkt die Nachbarschaft eines elektronegativen Donors, wie Stickstoff oder Sauerstoff, in alpha-Stellung zum Silicium-Atom, also beispielsweise nur durch eine Methylenbrücke davon getrennt, eine Aktivierung von Alkoxygruppen am Silicium-Atom. Diese sind dadurch gegenüber Nukleophilen, wie Wasser, reaktiver. Dies wiederum bewirkt eine beschleunigte Hydrolyse, ohne dass beispielsweise zinnhaltige Katalysatoren erforderlich wären. Die Hydrolyse der Silane kann unter Vernetzung zu Siloxanen erfolgen. Insoweit stellen reaktive Heißschmelzklebstoffzusammensetzungen der vorliegenden Erfindung alpha-Silan-terminierte Schmelzklebstoffe dar, die feuchtigkeitsvernetzend zu Siloxanen reagieren können.

Vorzugsweise handelt es sich bei dem mindestens einen alpha-Silan-terminierten organischen Polymer um ein Polymer, das eine Vielzahl von Endgruppen der Formel

*-X-C(=O)-N(R)-C(R¹R²)-Si(R³)ₐ(OR⁴)₃₋ₐ

aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 0, 1 oder 2 steht und
"*" die Bindung für die Anbindung an das Polymer kennzeichnet.

Mehr bevorzugt steht R für Wasserstoff oder einen Alkylrest, der 1 bis 4 Kohlenstoffatome aufweist, wobei der Alkylrest geradkettig oder verzweigt sein kann. Weiter mehr bevorzugt handelt es sich bei R um H, Methyl oder Ethyl, weiter mehr bevorzugt um Wasserstoff oder Methyl.

Insbesondere bevorzugt ist R Wasserstoff.

Mehr bevorzugt sind R¹ und R² gleich. Weiterhin mehr bevorzugt sind R¹ und R² Wasserstoff oder ein Alkylrest, der 1 bis 4 Kohlenstoffatome aufweist, wobei der Alkylrest geradkettig oder verzweigt sein kann. Weiter mehr bevorzugt handelt es sich bei R¹ und R² um H, Methyl oder Ethyl, weiter mehr bevorzugt um Wasserstoff oder Methyl.

Insbesondere bevorzugt sind R¹ und R² Wasserstoff.

Mehr bevorzugt sind R³ und R⁴ gleich. Weiterhin mehr bevorzugt sind R³ und R⁴ ein Alkylrest, der 1 bis 4 Kohlenstoffatome aufweist, wobei der Alkylrest geradkettig oder verzweigt sein kann. Weiter mehr bevorzugt handelt es sich bei R³ und R⁴ um Methyl oder Ethyl.

Insbesondere bevorzugt sind R³ und R⁴ Methyl.

Vorzugsweise ist a =1 oder 2, mehr bevorzugt ist a = 1.

Ein beispielhaftes mindestens ein alpha-Silan-terminiertes organisches Polymer ist ein Polymer, das eine Vielzahl von Endgruppen der Formel *-O-C(=O)-NH-CH₂-Si(CH₃)(OCH₃)₂ aufweist.

Die Vielzahl der oben näher beschriebenen Endgruppen terminiert ein organisches Polymer. Vorzugsweise handelt es sich bei dem organischen Polymer um ein Polyoxyalkylen, ein Kohlenwasserstoffpolymer, ein Polyurethan, ein Polyester, ein Polyamid, ein Polyacrylat, ein Polymethacrylat oder ein Polycarbonat. Bevorzugt ist Polyoxyalkylen. Vorzugsweise enthält das organische Polymer über die oben aufgeführten Endgruppen keine weiteren Silangruppen.

Bevorzugte Polyoxyalkylene sind Polypropylene, beispielsweise mit einem zahlengemittelten Molekulargewicht im Bereich von 5000 g/mol bis 50.000 g/mol, mehr bevorzugt von 7500 g/mol bis 30.000 g/mol, mehr bevorzugt von 10.000 g/mol bis 15.000 g/mol.

Die Komponente a) weist einen Anteil von 3 Gew.-% bis 49 Gew.-% bezogen auf das Gesamtgewicht der Zusammensetzung auf. Vorzugsweise beträgt der Anteil 3 bis 20 Gew.-%, mehr bevorzugt 5 bis 20 Gew.-%.

Weiterhin weist die reaktive Heißschmelzklebstoffzusammensetzung nach der vorliegenden Erfindung mindestens ein Acrylatharz basiertes Polymer als Komponente b) auf. Dementsprechend kann die erfindungsgemäße Zusammensetzung ein oder mehrere, wie zwei, drei oder vier, Acrylat basierte Polymere aufweisen. Hierbei ist für den zuständigen Fachmann klar, dass Polymere keine Reinstoffe darstellen, sondern herstellungsbedingt als Stoffgemisch mit einer charakteristischen Stoffverteilung auftreten und dass daher "ein Polymer" vereinfachend für dieses Stoffgemisch steht. Vorzugsweise besteht die Komponente b) nur aus einem Acrylharz basierten Polymer.

Sofern Komponente a) als organisches Polymer ebenfalls ein Acrylatharz basiertes Polymer ist, lassen sich die Komponenten a) und b) dadurch unterscheiden, dass Komponente b) keine alpha-Silan terminierten Gruppen aufweist.

Vorzugsweise handelt es sich bei dem Acrylat-basierten Polymer um ein Homoacrylat, ein Homomethacrylat, ein Copolymer aus mindestens zwei unterschiedlichen Acrylaten, ein Copolymer aus mindestens zwei unterschiedlichen Methacrylaten oder ein Copolymer aus mindestens einem Acrylat und mindestens einem Methacrylat.

Der Anteil der Komponente b) beträgt 1 Gew.-% bis 20 Gew.-% bezogen auf das Gesamtgewicht der erfindungsgemäßen reaktiven Heißschmelzklebstoffzusammensetzung. Vorzugsweise beträgt der Anteil 1 Gew.-% bis 10 Gew.-%. Weiter bevorzugt beträgt der Anteil 8 Gew.-% bis 9 Gew.-%.

Komponente b) dient dazu, eine ausreichende Anfangshaftung zu erreichen. Hierbei wird insbesondere ein Copolymer bestehend aus Methylmethacrylat und n-Butylmethacrylat bevorzugt.

Das mindestens eine Acrylatharz basierte Polymer kann kristallin, teilweise kristallin oder amorph sein und weist somit einen Schmelzpunkt, Schmelzbereich (hier wird der untere Temperaturpunkt als Schmelzpunkt angesehen) oder eine Glasübergangstemperatur auf. Vorzugsweise liegt diese Temperatur in einem Bereich von 30 °C bis 300 °C, mehr bevorzugt in einem Bereich von 30 °C bis 250 °C, weiter mehr bevorzugt in einem Bereich von 30°C bis 150 °C, weiter mehr bevorzugt in einem Bereich von 30 °C bis 80 °C, weiter mehr bevorzugt in einem Bereich von 40 °C bis 75 °C, weiter mehr bevorzugt in einem Bereich von 50 °C und 70 °C und insbesondere bei 60 °C. Vorzugsweise ist das mindestens eine Acrylatharz basierte Polymer amorph, so dass sich dann die angegebenen Temperaturwerte auf dessen Glasübergangstemperatur beziehen.

Vorzugsweise weist das mindestens eine Acrylatharz basierte Polymer ein mittleres gewichtsgemitteltes Molgewicht im Bereich von 10.000 g/mol bis 150.000 g/mol auf. Mehr bevorzugt ist ein Bereich von 25.000 g/mol bis 125.000 g/mol, weiter mehr bevorzugt ein Bereich von 30.000 g/mol bis 110.000 g/mol, weiter mehr bevorzugt ein Bereich von 35.000 g/mol bis 100.000 g/mol, weiter mehr bevorzugt ein Bereich von 40.000 g/mol bis 90.000 g/mol, weiter mehr bevorzugt ein Bereich von 45.000 g/mol bis 80.000 g/mol, weiter mehr bevorzugt ein Bereich von 50.000 g/mol bis 70.000 g/mol und insbesondere liegt das mittlere gewichtsgemittelte Molgewicht bei 60.000 g/mol.

Als Komponente c) enthält die reaktive Heißschmelzklebstoffzusammensetzung mindestens eine zumindest bei 100 °C flüssige chemische Verbindung, in der sich zumindest bei 150 °C das mindestens eine Acrylatharz basierte Polymer löst.

Im Rahmen der vorliegenden Erfindung ist unter "zumindest bei 150 °C gelöst" das Auflösen festen Acrylharz basiertem Polymer zu verstehen. Das Lösen kann jedoch auch bereits bei tieferer Temperatur erfolgen. Sofern der Schmelzpunkt, -bereich oder die Glasübergangstemperatur unterhalb 150 °C liegt, ist unter "gelöst" das Herstellen einer einphasigen Mischung mit der chemischen Verbindung zu verstehen.

Die Komponente c) kann eine chemische Verbindung oder mehrere, wie zwei, drei oder vier, Verbindungen aufweisen. Vorteilhafterweise weist diese nur eine Verbindung auf. Die Komponente c) ist unterschiedlich zu den Komponenten a) oder b). Insofern ist eine Verbindung der Komponente c) zuzurechnen, wenn diese in der Lage ist, Komponente b) zumindest bei 150 °C im Rahmen ihrer möglichen Anteile an der Gesamtzusammensetzung zu lösen und dabei selbst zumindest bei 100 °C flüssig vorzuliegen und diese sich von den Komponenten a) und b) unterscheidet.

Der Anteil an Komponente c) beträgt 1 Gew.-% bis 20 Gew.-% bezogen auf das Gesamtgewicht der erfindungsgemäßen reaktiven Heißklebstoffzusammensetzung. Vorzugsweise beträgt der Anteil 1 Gew.-% bis 10 Gew.-%. Mehr bevorzugt beträgt der Anteil 6 Gew.-%.

Für die chemische Verbindung ist neben deren Lösevermögen lediglich bedeutend, dass diese zumindest bei 100 °C als Flüssigkeit vorliegt. Zahlreiche Verbindungen können eingesetzt werden und der Fachmann ist in der Lage durch einfache Löseversuche geeignete Verbindungen aufzufinden. Nachfolgend sind beispielhafte Verbindungen aufgeführt, die eingesetzt werden können.

Vorteilhafterweise kann es sich bei der mindestens einen zumindest bei 100 °C flüssigen chemischen Verbindung, in der sich zumindest bei 150 °C das mindestens eine Acrylatharz basierte Polymer löst, um einen Weichmacher handeln.

Beispielhafte Weichmacher sind im Stand der Technik bekannt. Es sei hierbei auf die in DIN EN ISO 1043-3 (2017-03) aufgeführten Beispiele verwiesen.

Beispiele für Weichmacher sind also:

| | | |
|---|---|---|
| Alkylsulfonsäureester | Diisooctylmaleat | N-Butylbenzolsulfonamid |
| Butyl-*O*-acetylrizinoleat | Diisooctylphthalat | Nonylundecyladipat |
| Benzylbutylphthalat | Diisooctylsebazat | Nonylundecylphthalat |
| Butylcyclohexylphthalat | Diisooctylazelat | Octyldecyladipat |
| Butylnonylphthalat | Diisopentylphthalat | Octyldecylphthalat |
| Benzyloctyladipat | Di-2-Methyloxyethylphthalat | *n*-Octyldecyltrimellitat |
| Butyloctylphthalat | Dimethylphthalat | Paraffinöl |
| Butylstearat | Dimethylsebazat | Polypropylenadipat |
| Dibutyladipat | Dinonylfumarat | Polypropylensebazat |
| Di-2-Butoxyethylphthalat | Dinonylmaleat | Sucroseoctaacetat |
| Dibutylfumarat | Di-*n*-octylphthalat | Tributyl-*O*-acetylcitrat |
| Dibutylmaleat | Dinonylphthalat | Tri-2-Butoxyethylphosphat |
| Dibutylphthalat | Dinonylsebazat | Tributylphosphat |
| Dibutylsebazat | Dioctyladipat | Trichlorethylphosphat |
| Dibutylazelat | Dioctylisophthalat | Trikresylphosphat |
| Dicyclohexylphthalat | Dioctylphthalat | Tri-2,3-dibrompropylphosphat |
| Dicaprylphthalat | Dioctylsebazat | Tri-2,3-dichlorpropylphosphat |
| Didecylphthalat | Dioctylterephthalat | Triethyl-*o*-acetylcitrat |
| Diethylenglycoldibenzoat | Dioctylazelat | Tetrahydrofurfuryloleat |
| Diethylphthalat | Diphenylkresylphosphat | Triheptyltrimellitat |
| Diheptylphthalat | Di-Propylenglycoldibenzoat | Triisooctyltrimellitat |
| Dihexylphthalat | Diphenyloctylphosphat | Trioctylphosphat |
| Diisobutyladipat | Diphenylphthalat | Tetraoctylpyromellitat |
| Diisobutylmaleat | Diisotridecylphthalat | Trioctyltrimellitat |
| Diisobutylphthalat | Diundecylphthalat | Triphenylphosphat |
| Diisodecyladipat | Epoxidiertes Leinsamenöl | Trixylylenphosphat |
| Diisodecylphthalat | Epoxidiertes Sojabohnenöl | 1,2-Cyclohexandicarbonsäure-diisononylester |
| Diisoheptylphthalat | Glycerintriacetat | Isodecylbenzoat |
| Diisohexylphthalat | Heptylnonylundecyladipat | |
| Diisononyladipat | Heptylnonylundecylphthalat | |
| Diisononylphthalat | Hexyloctyldecyladipat | |
| Diisooctyladipat | Hexyloctyldecylphthalat | |

Solche Weichmacher sind kommerziell erhältlich. Beispielhaft sei Hexamoll^{®} DINCH der Firma BASF SE, Ludwigshafen (DE) genannt. Bevorzugt sind 1,2-Cyclohexandicarbonsäure-diisononylester oder Isodecylbenzoat.

Ebenso ist es möglich, dass es sich bei der mindestens einen zumindest bei 100 °C flüssigen chemischen Verbindung, in der sich zumindest bei 150 °C das mindestens eine Acrylat-harz basierte Polymer löst, um ein Polyalkylenglykol handeln. Bevorzugte Polyalkylenglykole sind Polyethylenglykol und Polypropylenglykol, mehr bevorzugt Polypropylenglykol. Vorzugsweise weist das Polyalkylenglykol ein zahlengemitteltes Molekulargewicht im Bereich von 500 g/mol bis 5000 g/mol auf, mehr bevorzugt im Bereich von 750 g/mol bis 4000 g/mol, mehr bevorzugt im Bereich von 1000 g/mol bis 3000 g/mol, insbesondere liegt das zahlengemittelte Molekulargewicht bei 2000 g/mol.

Ebenso ist es möglich, dass es sich bei der mindestens einen zumindest bei 100 °C flüssigen chemischen Verbindung, in der sich zumindest bei 150 °C das mindestens eine Acrylat-harz basierte Polymer löst, um ein Alkoxysilan handelt. Alkoxysilane sind kommerziell erhältlich. Als Bespiel sei das von der Firma Evonik Industries AG, Essen (DE) mit der Handelsbezeichnung Tegopac^{®} aufgeführt. Hierbei handelt es sich um ein Bindemittel mit seitenständig vernetzendenden Ethoxysilanen.

Die erfindungsgemäße reaktive Heißschmelzklebstoffzusammensetzung enthält weiterhin eine Komponente d), die mindestens ein niedermolekulares Silan, das eine primäre oder sekundäre, vorzugsweise eine primäre, Aminogruppe oder eine geblockte Aminogruppe, die zu der primären oder sekundären Aminogruppe hydrolysiert, aufweist, enthält. Somit kann die Komponente d) ein oder mehrere, wie zwei, drei oder vier, solcher Silane aufweisen. Vorzugsweise besteht die Komponente d) nur aus einer Komponente. Die Komponente d) ist unterschiedlich zu den Komponenten a) bis c) und zählt nur insofern zu Komponente d), soweit diese nicht als eine der Komponenten a) bis c) aufgefasst werden kann.

Das mindestens eine niedermolekulare Silan der Komponente d) weist eine primäre Aminogruppe -NH₂ auf. Hierbei kann die Aminogruppe Teil einer funktionellen Gruppe, wie beispielsweise einer Amidgruppe -C(=O)NH₂ oder ein primäres Amin im engeren Sinne sein. Vorteilhafterweise handelt es sich um ein Amin. Auch niedermolekulare Silane, die eine sekundäre Aminogruppe aufweisen, können eingesetzt werden. Es können außerdem blockierte Aminosilane eingesetzt werden. Hierbei hydrolysiert die geblockte Aminogruppe zu der primären oder sekundären Aminogruppe, vorzugsweise zu der primären Aminogruppe. Als Beispiel sei ((Triethoxysilyl)propyl)methylisobutylimin zu nennen, das unter der Handelsbezeichnung VPS 1262 von der Firma Evonik (DE) vertrieben wird. Auch hier kann die Aminogruppe Teil einer funktionellen Gruppe sein oder es handelt sich um eine Aminogruppe, was bevorzugt ist. Selbstverständlich können mehrere primäre Aminogruppen vorhanden sein, insbesondere mehrere primäre Aminogruppen, mehrere sekundäre Aminogruppen und zumindest eine primäre und zumindest eine sekundäre Aminogruppe vorhanden sein. Anstelle der primären oder sekundären Aminogruppe kann selbstverständlich deren blockierte Form stehen. Bevorzugt ist jedoch eine primäre oder sekundäre, mehr bevorzugt eine primäre Aminogruppe.

Vorteilhafte niedermolekulare Silane weisen ein Molekulargewicht im Bereich von 100 g/mol bis 500 g/mol auf.

Bevorzugte niedermolkulare Silane sind in DE 10 2012 200790 A1 beschrieben. Demzufolge sind bevorzugte niedermolekulare Silane solche enthaltend Einheiten der Formel

DSI(OR^{7'})_{g'}R^{8'}_{(3-g')} (IX), worin

R^{7'} gleich oder verschieden sein kann und Wasserstoffatom oder gegebenenfalls substituierte Kohlenwasserstoffreste bedeutet,

D gleich oder verschieden sein kann und einen einwertigen, SiC-gebundenen Rest mit basischem Stickstoff einer primären, oder sekundären oder geblockten Aminogruppe bedeutet, R^{8'} gleich oder verschieden sein kann und einen einwertigen, gegebenenfalls substituierten SiC-gebundenen, von basischem Stickstoff freien organischen Rest bedeutet,

g' 1, 2 oder 3, bevorzugt 2 oder 3, ist.

Beispiele für gegebenenfalls substituierte Kohlenwasserstoffreste R^{7'} sind die für Rest R^{3'} unten angegebenen Beispiele.

Bei den Resten R^{7'} handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R^{8'} sind die für R^{3'} unten angegebenen Beispiele.

Bei Rest R^{8'} handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-, (C₅R₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten (geblockte Aminogruppen).

Beispiele für die Silane der Formel (IX) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃Si-(OCH₃)₃, H₂N(CH₂)₂NH(CH₂)₂NH(CH₂)₃-Si(OC₂H₅)₃, cyclo-C₆H₁₁NH(CH₂)₃Si-(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)2CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Besonders bevorzugte Beispiele sind auch N-(2-Aminoethyl)-3-aminopropyltrimethoxysilan, 3-Amino-propyltrimethoxysilan, 3-(2-Aminoethylamino)propyltriethoxysilan, N-(2-Aminoethyl)-3-amino-propyldimethoxysilan, oder 3-Ureidopropyltrimethoxysilan. Bevorzugt ist insbesondere 3-Aminopropyltrimethoxysilan.

Der Anteil der Komponente d) beträgt 0,001 Gew.-% bis 5 Gew.-% bezogen auf das Gesamtgewicht der erfindungsgemäßen Heißschmelzklebstoffzusammensetzung. Vorzugsweise beträgt der Anteil 0,001 Gew.-% bis 1 Gew.-%. Weiterhin bevorzugt beträgt der Anteil 0,2 Gew.-%.

Neben den oben aufgeführten Komponenten a) bis d) kann die erfindungsgemäße Heißklebstoffzusammensetzung weitere Komponenten enthalten.

So kann die erfindungsgemäße Heißklebstoffzusammensetzung mindestens ein Siliconharz, wie ein Phenylsilikonharz enthalten. Siliconharze sind beispielsweise in DE 10 2013 213 835 A1 beschrieben. Ein Siliconharz gilt im Rahmen der vorliegenden Erfindung als zusätzliche Komponente, sofern es sich nicht bereits um eine der oben bezeichneten Komponenten handelt.

Dementsprechend enthalten mögliche Siliconharze gemäß DE 10 2013 213 835 A1 Einheiten der Formel

R^{3'}_{c'}(R^{4'}O)_{d'}H^{5'}_{e'}SiO_{(4-c'-d'-e')/2} (II),

wobei
R^{3'} gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R^{4'} gleich oder verschieden sein kann und Wasserstoffatom oder einen einwertigen, gegebenenfalls substituierten Kohlenwasserstoffrest bedeutet,
R^{5'} gleich oder verschieden sein kann und einen einwertigen, SiC-gebundenen, gegebenenfalls substituierten aromatischen Kohlenwasserstoffrest bedeutet,
c' 0, 1, 2 oder 3 ist,
d' 0, 1, 2 oder 3, bevorzugt 0, 1 oder 2, besonders bevorzugt 0 oder 1, ist und
e' 0, 1 oder 2, bevorzugt 0 oder 1, ist,
mit der Maßgabe, dass die Summe aus c' + d' + e' kleiner oder gleich 3 ist, in mindestens einer Einheit e' verschieden 0 ist und in mindestens 40 % der Einheiten der Formel (II) die Summe c' + e' gleich 0 oder 1 ist.

Geeignete Siliconharze bestehen vorzugsweise zu mindestens 90 Gew.-% aus Einheiten der Formel (II), besonders bevorzugt ausschließlich aus Einheiten der Formel (II).

Beispiele für Reste R^{3'} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der o und der β-Phenylethylrest.

Beispiele für substituierte Reste R^{3'} sind Halogenalkylreste, wie der 3,3,3-Trifluor-n-propylrest, der 2, 2,2,2`,2`,2`-Hexafluorisopropylrest und der Heptafluorisopropylrest, und Halogenarylreste, wie der o-, m- und p-Chlorphenylrest.

Bevorzugt handelt es sich bei Rest R^{3'} um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest. Es kann sich bei dem Rest R^{3'} aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste.

Bevorzugt handelt es sich bei Rest R^{3'} jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R^{4'} sind Wasserstoffatom oder die für Rest R^{3'} angegebenen Beispiele.

Bevorzugt handelt es sich bei Rest R^{4'} um ein Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R^{5'} sind die oben für R^{3'} angegebenen aromatischen Reste.

Bevorzugt handelt es sich bei Rest R^{5'} um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden Siliconharze eingesetzt, in denen mindestens 90% aller Reste R^{3'} für Methylrest, mindestens 90% aller Reste R^{4'} für Methyl-, Ethyl-, Propyl- oder Isopropylrest und mindestens 90% aller Reste R^{5'} für Phenylrest stehen.

Vorzugsweise werden Siliconharze, die mindestens 40%, besonders bevorzugt mindestens 60%, Einheiten der Formel (II) aufweisen, in denen c` gleich 0 ist, jeweils bezogen auf die Gesamtzahl an Einheiten der Formel (II).

Vorzugsweise werden Siliconharze eingesetzt, die, jeweils bezogen auf die Gesamtzahl an Einheiten der Formel (II), mindestens 70%, besonders bevorzugt mindestens 80%, Einheiten der Formel (II) aufweisen, in denen d` für den Wert 0 oder 1 steht.

Vorzugsweise werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 steht. Es können Siliconharze eingesetzt werden, die ausschließlich Einheiten der Formel (II) aufweisen, in denen e' gleich 1 ist, aber besonders bevorzugt weisen mindestens 10%, besonders bevorzugt mindestens 20%, höchstens 60%, besonders bevorzugt höchstens 80%, der Einheiten der Formel (II) ein e' von 0 auf.

Vorzugsweise werden Siliconharze eingesetzt, die, jeweils bezogen auf die Gesamtzahl an Einheiten der Formel (II), mindestens 50%, besonders bevorzugt mindestens 70%, insbesondere mindestens 80%, Einheiten der Formel (II) aufweisen, in denen die Summe c' + e' gleich 1 ist.

In einer besonders bevorzugten Ausführung der Erfindung werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c' für den Wert 0 steht. Vorzugsweise weisen dabei höchstens 40%, besonders bevorzugt höchstens 70% aller Einheiten der Formel (II) ein d` ungleich 0 auf.

In einer weiteren besonders bevorzugten Ausführung der Erfindung werden als Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c` für den Wert 0 steht und die zudem mindestens 1 %, bevorzugt mindestens 10%, an Einheiten der Formel (II) aufweisen, in denen c' für 1 oder 2, bevorzugt für 1, und e` für 0 steht.

Beispiele für die Siliconharze sind Organopolysiloxanharze, die im Wesentlichen, vorzugsweise ausschließlich, aus (Q)-Einheiten der Formeln SiO_{4/2}, Si(OR^{4'})O_{3/2}, Si(OR^{4'})₂O_{2/2} und Si(OR^{4'})₃O_{1/2}, (T)-Einheiten der Formeln PhSiO_{3/2}, PhSi(OR^{4'})O_{2/2}, PhSi(OR^{4'})₂O_{1/2}, MeSiO_{3/2}, MeSi(OR^{4'})O_{2/2} und MeSi(OR^{4'})₂O_{1/2} (D)-Einheiten der Formeln Me₂SiO_{2/2}, Me₂Si(OR^{4'})O_{1/2}, Ph₂SiO_{2/2} und Ph₂Si(OR^{4'})O_{1/2}, MePhSiO_{2/2} und MePhSi(OR^{4'})O_{1/2} sowie (M)-Einheiten der Formel Me₃SiO_{1/2} bestehen, wobei Me für einen Methylrest, Ph für einen Phenylrest und R^{4'} für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten 0-2 Mol (Q)-Einheiten, 0-2 Mol (D)-Einheiten und 0-2 Mol (M)-Einheiten enthält.

Bevorzugte Beispiele für Siliconharze sind Organopolysiloxanharze, die im Wesentlichen, vorzugsweise ausschließlich, aus T-Einheiten der Formeln PhSiO_{3/2}, PhSi(OR^{4'})O_{2/2} und PhSi(OR^{4'})₂O_{1/2}, T-Einheiten der Formeln MeSiO_{3/2}, MeSi(OR^{4'})O_{2/2} und MeSi(OR^{4'})₂O_{1/2} sowie D-Einheiten der Formeln Me₂SiO_{2/2} und Me₂Si(OR^{4'})O_{1/2} bestehen, wobei Me für einen Methylrest, Ph für einen Phenylrest und R^{4'} für ein Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von (T)- zu (D)-Einheiten von 0,5 bis 2,0.

Unter diesen Beispielen werden Siliconharze besonders bevorzugt, deren Einheiten der Formel (II) zu mindestens 50%, bevorzugt mindestens 70%, insbesondere mindestens 85% aus T- Einheiten der Formeln PhSiO_{3/2}, PhSi(OR^{4'})O_{2/2}, PhSi(OR^{4'})₂O_{1/2}, Me SiO_{3/2}, MeSi(OR^{4'})O_{2/2} und MeSi(OR^{4'})₂O_{1/2} gebildet werden, wobei diese Siliconharze mindestens 30%, bevorzugt mindestens 40%, insbesondere mindestens 50% T-Einheiten der Formeln PhSiO_{3/2}, PhSi(OR^{4'})O_{2/2} und PhSi(OR^{4'})₂O_{1/2} und mindestens 10%, bevorzugt mindestens 15%, insbesondere mindestens 20% T-Einheiten der MeSiO_{3/2}, MeSi(OR^{4'})O_{2/2} und MeSi(OR^{4'})₂O_{1/2} enthalten.

Vorzugsweise besitzen die Siliconharze eine mittlere Molmasse (Zahlenmittel) Mn von mindestens 500 g/mol und besonders bevorzugt von mindestens 600 g/mol. Die mittlere Molmasse Mn liegt vorzugsweise bei höchstens 400000 g/mol, besonders bevorzugt bei höchstens 100000 g/mol, insbesondere bei höchstens 50000 g/mol.

Solche Siliconharze können bei 23°C und 1000 hPa sowohl fest als auch flüssig sein, wobei Siliconharze bevorzugt flüssig sind.

Bei den Siliconharzen handelt es sich um handelsübliche Produkte (beispielsweise Silres^{®} IC 368 der Firma Wacker Chemie (DE)) oder diese können nach in der Siliciumchemie gängigen Methoden hergestellt werden.

Weiterhin kann die reaktive Heißschmelzklebstoffzusammensetzung nach der vorliegenden Erfindung zusätzlich mindestens ein klebrigmachendes Polymer (Tackifier) enthalten. Der Anteil liegt vorteilhafterweise bei 10 Gew.-% bis 40 Gew.-% bezogen auf das Gesamtgewicht der Zusammensetzung.

Weiterhin kann die reaktive Heißschmelzklebstoffzusammensetzung nach der vorliegenden Erfindung zusätzlich mindestens einen Füllstoff enthalten. Vorteilhafterweise beträgt dessen Anteil 10 Gew.-% bis 40 Gew.-% bezogen auf das Gesamtgewicht der Zusammensetzung.

Beispielhafte Füllstoffe sind Calciumcarbonat, beispielsweise Kreide oder Korund, wie Edelkorund. Durch den Einsatz von Füllstoff kann der Fadenzug beim Verarbeiten der Klebstoffzusammensetzung vermieden oder vermindert werden.

Durch die erfindungsgemäßen reaktiven Heißschmelzklebstoffzusammensetzungen lassen sich hohe Füllgrade realisieren, was bei verschiedenen Anwendungen vorteilhaft sein kann. Zu nennen seien hier beispielsweise Anwendungen, die eine gute thermische Leitfähigkeit oder besondere Anforderungen hinsichtlich des Brandverhaltenes erfordern.

Ein weiterer Aspekt der vorliegenden Erfindung ist ein Verfahren zur Herstellung einer reaktiven Heißschmelzklebstoffzusammensetzung nach der vorliegenden Erfindung, der die Schritte (a) bis (d) enthält.

Dabei wird in einem ersten Schritt (a) mindestens ein Acrylatharz basiertes Polymer zu mindestens einer zumindest bei 100 °C flüssigen chemischen Verbindung, in der sich zumindest bei 150 °C das mindestens eine Acrylatharz basierte Polymer löst, hinzugefügt.

Ebenso kann das mindestens eine Acrylharz-basierte Polymer zu einer Mischung, die die mindestens eine chemische Verbindung enthält, hinzugefügt werden.

Das Hinzufügen erfolgt bei einer Temperatur im Bereich von 130 °C bis 170 °C, vorzugsweise im Bereich von 140 °C bis 160 °C insbesondere bei 150 °C.

Weiterhin kann in Schritt (a) ein klebrigmachendes Polymer hinzugefügt werden.

In einem nächsten Schritt (b)erfolgt ein Abkühlen der Mischung auf eine Temperatur im Bereich von 80°C bis 120 °C.

Danach folgt als Schritt (c) das Hinzufügen mindestens eines alpha-silan-terminierten organischen Polymers zu der abgekühlten Mischung.

Schließlich erfolgt in Schritt (d) das Hinzufügen mindestens eines niedermolekularen Silans, das mindestens eine primäre oder sekundäre, bevorzugt primäre, Aminogruppe oder eine geblockte Aminogruppe, die zu der primären oder sekundären Aminogruppe hydrolysiert, aufweist, wobei eine reaktive Heißschmelzklebstoff-zusammensetzung nach der vorliegenden Erfindung erhalten wird.

In Schritt (c) kann zusätzlich mindestens ein Füllstoff hinzugefügt werden. Vorzugsweise erfolgen die Schritte (c) und (d) derart nacheinander, dass zwischen den Schritten entgast werden kann.

Die erfindungsgemäße reaktive Heißschmelzklebstoffzusammensetzung ist walzenstabil und daher einer Applikation über Walzen zugänglich. Dementsprechend eignet sich die erfindungsgemäße reaktive Heißschmelzklebstoffzusammensetzung besonders für ein Verfahren zur Flächenkaschierung, in dem die reaktive Heißschmelzklebstoffzusammensetzung nach der vorliegenden Erfindung auf einem Substrat mit Hilfe einer Auftragswalze aufgetragen wird.

Überraschenderweise hat sich gezeigt, dass der Auftrag mit Hilfe einer Walzenauftragsmaschine selbst nach Überschreiten des Zeitraums der Walzenstabilität, d. h. wenn das Bindemittel beim Verarbeiten merklichen Fadenzug aufweist, der das Auftragsbild bestimmt, reinigen lässt.

Dementsprechend ist ein weiterer Gegenstand der vorliegenden Erfindung die Verwendung einer erfindungsgemäßen reaktiven Heißschmelzklebstoffzusammensetzung zum Walzenauftrag.

Vorteilhafte Anwendungen der erfindungsgemäßen reaktiven Heißschmelzklebstoffzusammensetzungen ergeben sich aus deren guten Haftung und Anfangshaftung. Auch für den Fall, dass kein Walzenauftrag erfolgt, beispielsweise der Einsatz in der Fensterprofilummantelung, zeigen sich die vorteilhaften Eigenschaften, die nachfolgend aufgeführt sind. Weitere Anwendungen sind solche, bei denen eine verbesserte Wärmeleitfähigkeit erreicht werden können. Ebenso seien Anwendungen zu nennen, die mit einem verbesserten Brandverhalten einhergehen.

Es zeigen sich insbesondere folgende Vorteile:
- Isocyanatfreiheit,
- gutes Haftungsspektrum, insbesondere auf Metallen, Glas und anderen Werkstoffen
- Kein Aufschäumen durch CO₂-Bildung.

Die vorliegende Erfindung wird anhand der nachfolgenden Beispiele näher erläutert, wobei die Erfindung nicht auf diese Ausführungsbeispiele beschränkt ist.

### Beispiele

### Beispiel 1:

60 g DINCH, 344 g DERTOPHENE T, 7 g MODAREZ MFP L und 7 g IRGANOX 1135 wurden in einem Planetenmischer mit Butterfly-Rührwerk unter Vakuum (50 mbar) bei 150 °C gemischt. Anschließend wurden portionsweise 80 g ELVACITE 2016 zugegeben und solange gerührt, bis die Mischung homogen war. Die Lösung wurde auf 100 °C abgekühlt und es wurden 200 g GENIOSIL XB 502 zugegeben, 300 g CALCIT MX 30 dispergiert und die Mischung für 10 Minuten unter Vakuum bei 50 mbar entlüftet. Zuletzt wurden 2 g GENIOSIL GF 96 eingerührt und die Mischung für weitere 2 Minuten gerührt (siehe Tabelle 1).

**Tabelle 1: Verwendete Rohstoffe und deren Mengenbilanz.**

| **Rohstoff** | **Hersteller** | **Chemische Beschreibung** | **Menge** |
|---|---|---|---|
| HEXAMOLL DINCH | BASF | Weichmacher c) | 60 g |
| DERTOPHENE T | LES DERIVES RESINIQUES ET TERPENIQUES (DRT) | Terpenphenolharz | 344 g |
| MODAREZ MFP L | SYNTHRON | Fließhilfe | 7 g |
| IRGANOX 1135 | BASF | Antioxidans | 7 g |
| ELVACITE 2016 | Luctide International | Acrylharz b) | 80 g |
| GENIOSIL XB 502 | Wacker | α-silan term. Polyether a) | 200 g |
| CALCIT MX 30 | SH MINERALS GMBH | Füllstoff | 300 g |
| GENIOSIL GF 96 | Wacker | Aminosilan d) | 2 g |

Die physikalisch-chemischen Eigenschaften der so erhaltenen Formulierung können wie folgt zusammengefasst werden: Viskosität (100 °C, bei 3,4 s⁻¹): 10 Pa s.

### Beispiel 2:

60 g Desmophen 2061 BD (Polypropylenglykol 2000), 344 g DERTOPHENE T, 7 g MODAREZ MFP L und 7 g IRGANOX 1135 wurden in einem Planetenmischer mit Butterfly-Rührwerk unter Vakuum (50 mbar) bei 150 °C gemischt. Anschließend wurden portionsweise 80 g ELVACITE 2016 zugegeben und solange gerührt, bis die Mischung homogen war. Die Lösung wurde auf 100 °C abgekühlt und es wurden 200 g GENIOSIL XB 502 zugegeben, 300 g CALCIT MX 30 dispergiert und die Mischung für 10 Minuten unter Vakuum bei 50 mbar entlüftet. Zuletzt wurden 2 g GENIOSIL GF 96 eingerührt und die Mischung für weitere 2 Minuten gerührt (siehe Tabelle 2a).

**Tabelle 2a: Verwendete Rohstoffe und deren Mengenbilanz.**

| **Rohstoff** | **Hersteller** | **Chemische Beschreibung** | **Menge** |
|---|---|---|---|
| Desmophen 2061 BD | COVESTRO | PPG 2000 c) | 60 g |
| DERTOPHENE T | LES DERIVES RESINIQUES ET TERPENIQUES (DRT) | Terpenphenolharz | 344 g |
| MODAREZ MFP L | SYNTHRON | Fließhilfe | 7 g |
| IRGANOX 1135 | BASF | Antioxidans | 7 g |
| ELVACITE 2016 | Luctide International | Acrylharz b) | 80 g |
| GENIOSIL XB 502 | Wacker | α-silan term. Polyether a) | 200 g |
| CALCIT MX 30 | SH MINERALS GMBH | Füllstoff | 300 g |
| GENIOSIL GF 96 | Wacker | Aminosilan d) | 2 g |

Die physikalisch-chemischen Eigenschaften der so erhaltenen Formulierung können wie folgt zusammengefasst werden: Viskosität (100 °C, bei 3,4 s⁻¹): 10 Pa s. Der Aufbau der Zugscherfestigkeit mit der so erhaltenen Formulierung ist in Tabelle 2b zusammengefasst.

Tabelle 2b: Zugscherfestigkeiten (Schichtdicke 0,25 mm) in MPa zwischen Buche (Substrat 1) und verschiedenen Substraten (Substrat 2) bei nach einer Aushärtezeit von 7, 14 und 28 Tagen bei 20 °C und 50 % RH.

| **Substrat 2** | **Aushärtezeit [Tage]** | | |
|---|---|---|---|
| | **7** | **14** | **28** |
| | | | |
| PVC | 1,9 | 3,2 | 3,4 |
| ABS | 1,9 | 3,6 | 4,5 |
| PC | 2,7 | 3,5 | 4,4 |
| PMMA | 2,0 | 3,4 | 4,6 |
| GFK Epoxy | 2,4 | 3,3 | 5,4 |
| GFK Polyester | 2,3 | 2,9 | 4,6 |
| PU | 0,4 | 0,3 | 0,6 |
| PA 6.6 | 2,4 | 2,8 | 4,4 |
| EPDM | 0,6 | 0,6 | 0,4 |
| Stahl | 1,2 | 2,5 | 3,8 |
| feuerverzinkt. Stahl | 2,1 | 3,2 | 3,8 |
| elektrolyt. verzinkter Stahl | 1,9 | 3,2 | 3,2 |
| Messing | 1,8 | 2,8 | 4,0 |
| Kupfer | 1,7 | 3,3 | 4,0 |
| Aluminium | 2,3 | 2,7 | 4,9 |
| Edelstahl | 1,5 | 2,9 | 3,7 |

### Beispiel 3:

60 g Jayflex MB10 (Isodecylbenzoat), 344 g DERTOPHENE T, 7 g MODAREZ MFP L und 7 g IRGANOX 1135 wurden in einem Planetenmischer mit Butterfly-Rührwerk unter Vakuum (50 mbar) bei 150 °C gemischt. Anschließend wurden portionsweise 80 g ELVACITE 2016 zugegeben und solange gerührt, bis die Mischung homogen war. Die Lösung wurde auf 100 °C abgekühlt und es wurden 200 g GENIOSIL XB 502 zugegeben, 300 g CALCIT MX 30 dispergiert und die Mischung für 10 Minuten unter Vakuum bei 50 mbar entlüftet. Zuletzt wurden 2 g GENIOSIL GF 96 eingerührt und die Mischung für weitere 2 Minuten gerührt (siehe Tabelle 3).

**Tabelle 3: Verwendete Rohstoffe und deren Mengenbilanz.**

| **Rohstoff** | **Hersteller** | **Chemische Beschreibung** | **Menge** |
|---|---|---|---|
| Jayflex MB10 | Krahn Chemie GmbH | Isodecylbenzoat c) | 60 g |
| DERTOPHENE T | LES DERIVES RESINIQUES ET TERPENIQUES (DRT) | Terpenphenolharz | 344 g |
| MODAREZ MFP L | SYNTHRON | Fließhilfe | 7 g |
| IRGANOX 1135 | BASF | Antioxidans | 7 g |
| ELVACITE 2016 | Luctide International | Acrylharz b) | 80 g |
| GENIOSIL XB 502 | Wacker | α-silan term. Polyether a) | 200 g |
| CALCIT MX 30 | SH MINERALS GMBH | Füllstoff | 300 g |
| GENIOSIL GF 96 | Wacker | Aminosilan d) | 2 g |

Die physikalisch-chemischen Eigenschaften der so erhaltenen Formulierung können wie folgt zusammengefasst werden: Viskosität (100 °C, bei 3,4 s⁻¹): 10 Pa s.

### Beispiel 4:

60 g TEGOPAC BOND 251, 344 g DERTOPHENE T, 7 g MODAREZ MFP L und 7 g IRGANOX 1135 wurden in einem Planetenmischer mit Butterfly-Rührwerk unter Vakuum (50 mbar) bei 150 °C gemischt. Anschließend wurden portionsweise 80 g ELVACITE 2016 zugegeben und solange gerührt, bis die Mischung homogen war. Die Lösung wurde auf 100 °C abgekühlt und es wurden 200 g GENIOSIL XB 502 zugegeben, 300 g CALCIT MX 30 dispergiert und die Mischung für 10 Minuten unter Vakuum bei 50 mbar entlüftet. Zuletzt wurden 2 g GENIOSIL GF 96 eingerührt und die Mischung für weitere 2 Minuten gerührt (siehe Tabelle 4).

**Tabelle 4: Verwendete Rohstoffe und deren Mengenbilanz.**

| **Rohstoff** | **Hersteller** | **Chemische Beschreibung** | **Menge** |
|---|---|---|---|
| TEGOPAC BOND 251 | Evonik | Alkoxysilan c) | 60 g |
| DERTOPHENE T | LES DERIVES RESINIQUES ET TERPENIQUES (DRT) | Terpenphenolharz | 344 g |
| MODAREZ MFP L | SYNTHRON | Fließhilfe | 7 g |
| IRGANOX 1135 | BASF | Antioxidans | 7 g |
| ELVACITE 2016 | Luctide International | Acrylharz b) | 80 g |
| GENIOSIL XB 502 | Wacker | α-silan term. Polyether a) | 200 g |
| CALCIT MX 30 | SH MINERALS GMBH | Füllstoff | 300 g |
| GENIOSIL GF 96 | Wacker | Aminosilan d) | 2 g |

Die physikalisch-chemischen Eigenschaften der so erhaltenen Formulierung können wie folgt zusammengefasst werden: Viskosität (100 °C, bei 3,4 s⁻¹): 10 Pa·s.

### Beispiel 5:

60 g TEGOPAC BOND 251, 144 g SYLVARES 525, 7 g MODAREZ MFP L und 7 g IRGANOX 1135 wurden in einem Planetenmischer mit Butterfly-Rührwerk unter Vakuum (50 mbar) bei 150 °C gemischt. Anschließend wurden portionsweise 80 g ELVACITE 2016 zugegeben und solange gerührt, bis die Mischung homogen war. Die Lösung wurde auf 100 °C abgekühlt und es wurden 200 g GENIOSIL XB 502 zugegeben. In diese Mischung wurden jeweils 250 g Edelkorund F 1200 und 250 g Edelkorund Fepa Nr. F 220 dispergiert und die Mischung für 10 Minuten unter Vakuum bei 50 mbar entlüftet. Zuletzt wurden 2 g GENIOSIL GF 96 eingerührt und die Mischung für weitere 2 Minuten gerührt (siehe Tabelle 5).

**Tabelle 5: Verwendete Rohstoffe und deren Mengenbilanz.**

| **Rohstoff** | **Hersteller** | **Chemische Beschreibung** | **Menge** |
|---|---|---|---|
| TEGOPAC BOND 251 | Evonik | Alkoxysilan c) | 60 g |
| SYLVARES 525 | Arizona Chemical B.V. | Tackifier | 144 g |
| MODAREZ MFP L | SYNTHRON | Fließhilfe | 7 g |
| IRGANOX 1135 | BASF | Antioxidans | 7 g |
| ELVACITE 2016 | Luctide International | Acrylharz b) | 80 g |
| GENIOSIL XB 502 | Wacker | α-silan term. Polyether a) | 200 g |
| Edelkorund F 1200 | Hermes Schleifkörper | Füllstoff | 250 g |
| Edelkorund Fepa Nr. F 220 | Microbeads AG | Füllstoff | 250 g |
| GENIOSIL GF 96 | Wacker | Aminosilan d) | 2 g |

### Beispiel 6:

Von der Formulierung aus Beispiel 5 wurde ein ca. 3 mm dicker Klebstofffilm hergestellt, der über 4 Wochen bei Raumtemperatur (ca. 20 °C und 50 % relativer Luftfeuchte) ausgehärtet wurde. Für diesen Klebstofffilm wurde eine Wärmeleitfähigkeit (Transient Hot Bridge) von ca. 0,6 W/m·K ermittelt.

## Patentansprüche

1. Reaktive Heißschmelzklebstoffzusammensetzung bezogen auf das Gesamtgewicht der Zusammensetzung enthaltend
a) 3 Gew.-% bis 49 Gew.-% mindestens eines alpha-Silan-terminierten organischen Polymers;
b) 1 Gew.-% bis weniger als 20 Gew.-%, vorzugsweise 1 Gew.-% bis 10 Gew.-%, mindestens eines Acrylatharz basierten Polymers;
c) 1 Gew.-% bis 20 Gew.-%, vorzugsweise 1 Gew.-% bis 10 Gew.-%, mindestens einer zumindest bei 100 °C flüssigen chemischen Verbindung, in der sich zumindest bei 150 °C das mindestens eine Acrylatharz basierte Polymer löst;
d) 0,001 Gew.-% bis 5 Gew.-%, vorzugsweise 0,001 Gew.-% bis 1 Gew.-%, mindestens eines niedermolekularen Silans, das eine primäre oder sekundäre Aminogruppe oder eine geblockte Aminogruppe, die zu der primären oder sekundären Aminogruppe hydrolysiert, aufweist.

2. Reaktive Heißschmelzklebstoffzusammensetzung nach Anspruch 1, **dadurch gekennzeichnet, dass** das mindestens eine alpha-Silan-terminierte organische Polymer eine Vielzahl von Endgruppen der Formel *-X-C(=O)-N(R)-C(R¹R²)-Si(R³)ₐ(OR⁴)₃₋ₐ aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 0, 1 oder 2 steht und
"*" die Bindung für die Anbindung an das Polymer kennzeichnet.

3. Reaktive Heißschmelzklebstoffzusammensetzung nach Anspruch 1 oder 2, **dadurch gekennzeichnet, dass** das organische Polymer ein Polyoxyalkylen, ein Kohlenwasserstoffpolymer, ein Polyurethan, ein Polyester, ein Polyamid, ein Polyacrylat, ein Polymethacrylat oder ein Polycarbonat ist.

4. Reaktive Heißschmelzklebstoffzusammensetzung nach einem der Ansprüche 1 bis 3, **dadurch gekennzeichnet, dass** das Acrylatharz basierte Polymer ein Homoacrylat, ein Homomethacrylat, ein Copolymer aus mindestens zwei unterschiedlichen Acrylaten, ein Copolymer aus mindestens zwei unterschiedlichen Methacrylaten oder ein Copolymer aus mindestens einem Acrylat und mindestens einem Methacrylat ist.

5. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Weichmacher ist.

6. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Polyalkylenglykol ist.

7. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Alkoxysilan ist.

8. Reaktive Heißschmelzklebstoffzusammensetzung nach einem der Ansprüche 1 bis 7, **dadurch gekennzeichnet, dass** das mindestens eine niedermolekulare Silan, das eine primäre oder sekundäre Aminogruppe oder eine geblockte Aminogruppe, die zu der primären oder sekundären Aminogruppe hydrolysiert, aufweist, ein Molekulargewicht im Bereich von 100 bis 500 g/mol aufweist.

9. Reaktive Heißschmelzklebstoffzusammensetzung nach einem der Ansprüche 1 bis 8, **dadurch gekennzeichnet, dass** die Zusammensetzung zusätzlich 10 Gew.-% bis 40 Gew.-% mindestens eines klebrigmachenden Polymers (Tackifier) bezogen auf das Gesamtgewicht der Zusammensetzung aufweist.

10. Reaktive Heißschmelzklebstoffzusammensetzung nach einem der Ansprüche 1 bis 9, **dadurch gekennzeichnet, dass** die Zusammensetzung zusätzlich 10 Gew.-% bis 40 Gew.-% mindestens eines Füllstoffes bezogen auf das Gesamtgewicht der Zusammensetzung aufweist.

11. Verfahren zur Herstellung einer reaktiven Heißschmelzklebstoffzusammensetzung nach einem der Ansprüche 1 bis 10 die Schritte enthaltend
(a) Hinzufügen von mindestens einem Acrylatharz basierten Polymer zu mindestens einer zumindest bei 100 °C flüssigen chemischen Verbindung, in der sich zumindest bei 150 °C das mindestens eine Acrylatharz basierte Polymer löst, oder Hinzufügen zu einer Mischung, die die mindestens eine chemische Verbindung enthält, bei einer Temperatur im Bereich von 130 °C bis 170 °C;
(b) Abkühlen der Mischung auf eine Temperatur im Bereich von 80°C bis 120 °C;
(c) Hinzufügen mindestens eines alpha-silan-terminierten organischen Polymers zu der abgekühlten Mischung;
(d) Hinzufügen mindestens eines niedermolekularen Silans, das eine primäre oder sekundäre Aminogruppe oder eine geblockte Aminogruppe, die zu der primären oder sekundären Aminogruppe hydrolysiert, aufweist, wobei eine reaktive Heißschmelzklebstoff-zusammensetzung nach einem der Ansprüche 1 bis 10 erhalten wird.

12. Verfahren nach Anspruch 11, **dadurch gekennzeichnet, dass** in Schritt (a) weiterhin ein klebrigmachendes Polymer hinzugefügt wird.

13. Verfahren nach Anspruch 11 oder 12, **dadurch gekennzeichnet, dass** in Schritt (c) zusätzlich mindestens ein Füllstoff hinzugefügt.

14. Verfahren nach einem der Ansprüche 11 bis 13, **dadurch gekennzeichnet, dass** die Schritte (c) und (d) nacheinander erfolgen und zwischen den Schritten entgast wird.

15. Verfahren zur Flächenkaschierung den Schritt enthaltend
- Auftragen einer reaktiven Heißschmelzklebstoffzusammensetzung nach einem der Ansprüche 1 bis 10 auf einem Substrat mit Hilfe einer Auftragswalze.

## Claims

1. Reactive hotmelt adhesive composition comprising, based on the total weight of the composition,
a) 3 wt% to 49 wt% of at least one alpha-silane-terminated organic polymer;
b) 1 wt% to less than 20 wt%, preferably 1 wt% to 10 wt%, of at least one acrylate resin-based polymer;
c) 1 wt% to 20 wt%, preferably 1 wt% to 10 wt%, of at least one chemical compound which is liquid at least at 100°C and in which at least at 150°C the at least one acrylate resin-based polymer dissolves;
d) 0.001 wt% to 5 wt%, preferably 0.001 wt% to 1 wt%, of at least one low molecular mass silane which comprises a primary or secondary amino group or a blocked amino group which hydrolyses to the primary or secondary amino group.

2. Reactive hotmelt adhesive composition according to Claim 1, **characterized in that** the at least one alpha-silane-terminated organic polymer comprises a multiplicity of end groups of the formula *-X-C(=O)-N(R)-C(R¹R²)-Si(R³)ₐ(OR⁴)₃₋ₐ, where
X is O or N(R);
each R independently of any other is hydrogen or a hydrocarbon radical having 1 to 20 carbon atoms;
R¹ and R² independently of one another are hydrogen or a hydrocarbon radical having 1 to 20 carbon atoms;
R³ and R⁴ independently of one another are a hydrocarbon radical having 1 to 20 carbon atoms;
a is 1 or 2, and
"*" marks the bond for attachment to the polymer.

3. Reactive hotmelt adhesive composition according to Claim 1 or 2, **characterized in that** the organic polymer is a polyoxyalkylene, a hydrocarbon polymer, a polyurethane, a polyester, a polyamide, a polyacrylate, a polymethacrylate or a polycarbonate.

4. Reactive hotmelt adhesive composition according to any of Claims 1 to 3, **characterized in that** the acrylate resin-based polymer is a homoacrylate, a homomethacrylate, a copolymer of at least two different acrylates, a copolymer of at least two different methacrylates or a copolymer of at least one acrylate and at least one methacrylate.

5. Reactive hotmelt adhesive composition according to any of Claims 1 to 4, **characterized in that** the at least one chemical compound which is liquid at least at 100°C and in which at least at 150°C the at least one acrylate resin-based polymer dissolves is a plasticizer.

6. Reactive hotmelt adhesive composition according to any of Claims 1 to 4, **characterized in that** the at least one chemical compound which is liquid at least at 100°C and in which at least at 150°C the at least one acrylate resin-based polymer dissolves is a polyalkylene glycol.

7. Reactive hotmelt adhesive composition according to any of Claims 1 to 4, **characterized in that** the at least one chemical compound which is liquid at least at 100°C and in which at least at 150°C the at least one acrylate resin-based polymer dissolves is an alkoxysilane.

8. Reactive hotmelt adhesive composition according to any of Claims 1 to 7, **characterized in that** the at least one low molecular mass silane which comprises a primary or secondary amino group or a blocked amino group which hydrolyses to the primary or secondary amino group has a molecular weight in a range from 100 to 500 g/mol.

9. Reactive hotmelt adhesive composition according to any of Claims 1 to 8, **characterized in that** the composition further comprises 10 wt% to 40 wt% of at least one tackifying polymer (tackifier), based on the total weight of the composition.

10. Reactive hotmelt adhesive composition according to any of Claims 1 to 9, **characterized in that** the composition further comprises 10 wt% to 40 wt% of at least one filler, based on the total weight of the composition.

11. Process for producing a reactive hotmelt adhesive composition according to any of Claims 1 to 10, comprising the steps of
(a) adding at least one acrylate resin-based polymer to at least one chemical compound which is liquid at least at 100°C and in which at least at 150°C the at least one acrylate resin-based polymer dissolves, or adding it to a mixture which comprises the at least one chemical compound, at a temperature in the range of 130°C to 170°C;
(b) cooling the mixture to a temperature in the range from 80°C to 120°C;
(c) adding at least one alpha-silane-terminated organic polymer to the cooled mixture;
(d) adding at least one low molecular mass silane which comprises a primary or secondary amino group or a blocked amino group which hydrolyses to the primary or secondary amino group, to give a reactive hotmelt adhesive composition according to any of Claims 1 to 10.

12. Process according to Claim 11, **characterized in that** in step (a) additionally a tackifying polymer is added.

13. Process according to Claim 11 or 12, **characterized in that** in step (c) further at least one filler is added.

14. Process according to any of Claims 11 to 13, **characterized in that** the steps (c) and (d) take place successively and degassing is carried out between the steps.

15. Process for surface lamination, comprising the step of
- applying a reactive hotmelt adhesive composition according to any of Claims 1 to 10 to a substrate by means of an applicator roll.

## Revendications

1. Composition adhésive thermofusible réactive contenant, par rapport au poids total de la composition,
a) 3% en poids à 49% en poids d'au moins un polymère organique terminé par alpha-silane ;
b) 1% en poids à moins de 20%, de préférence 1% en poids à 10% en poids, d'au moins un polymère à base de résine acrylate ;
c) 1% en poids à 20% en poids, de préférence 1% en poids à 10% en poids, d'au moins un composé chimique liquide à au moins 100°C, dans lequel ledit au moins un polymère à base de résine acrylate se dissout à au moins 150°C ;
d) 0,001% en poids à 5% en poids, de préférence 0,001% en poids à 1% en poids, d'au moins un silane à bas poids moléculaire, qui présente un groupe amino primaire ou secondaire ou un groupe amino bloqué, qui s'hydrolyse en ledit groupe amino primaire ou secondaire.

2. Composition adhésive thermofusible réactive selon la revendication 1, **caractérisée en ce que** ledit au moins un polymère organique terminé par alpha-silane présente une multitude de groupes terminaux de formule *-X-C(=O)-N(R)-C(R¹R²)-Si(R³)ₐ(OR⁴)₃₋ₐ dans laquelle
X représente O ou N(R) ;
chaque R représente, indépendamment, hydrogène ou un radical hydrocarboné comprenant 1 à 20 atomes de carbone ;
R¹ et R² représentent, indépendamment l'un de l'autre, hydrogène ou un radical hydrocarboné comprenant 1 à 20 atomes de carbone ;
R³ et R⁴ représentent, indépendamment l'un de l'autre, un radical hydrocarboné comprenant 1 à 20 atomes de carbone ;
a représente 0, 1 ou 2 et
"*" caractérise la liaison pour la fixation au polymère.

3. Composition adhésive thermofusible réactive selon la revendication 1 ou 2, **caractérisée en ce que** le polymère organique est un polyoxyalkylène, un polymère hydrocarboné, un polyuréthane, un polyester, un polyamide, un polyacrylate, un polyméthacrylate ou un polycarbonate.

4. Composition adhésive thermofusible réactive selon l'une des revendications 1 à 3, **caractérisée en ce que** le polymère à base de résine acrylate est un homoacrylate, un homométhacrylate, un copolymère d'au moins deux acrylates différents, un copolymère d'au moins deux méthacrylates différents ou un copolymère d'au moins un acrylate et d'au moins un méthacrylate.

5. Composition adhésive thermofusible réactive selon l'une des revendications 1 à 4, **caractérisée en ce que** ledit au moins un composé chimique liquide à au moins 100°C, dans lequel ledit au moins un polymère à base de résine acrylate se dissout à au moins 150°C, est un plastifiant.

6. Composition adhésive thermofusible réactive selon l'une des revendications 1 à 4, **caractérisée en ce que** ledit au moins un composé chimique liquide à au moins 100°C, dans lequel ledit au moins un polymère à base de résine acrylate se dissout à au moins 150°C, est un polyalkylèneglycol.

7. Composition adhésive thermofusible réactive selon l'une des revendications 1 à 4, **caractérisée en ce que** ledit au moins un composé chimique liquide à au moins 100°C, dans lequel ledit au moins un polymère à base de résine acrylate se dissout à au moins 150°C, est un alcoxysilane.

8. Composition adhésive thermofusible réactive selon l'une des revendications 1 à 7, **caractérisée en ce que** ledit au moins un silane à bas poids moléculaire, qui présente un groupe amino primaire ou secondaire ou un groupe amino bloqué, qui s'hydrolyse en ledit groupe amino primaire ou secondaire, présente un poids moléculaire dans la plage de 100 à 500 g/mole.

9. Composition adhésive thermofusible réactive selon l'une des revendications 1 à 8, **caractérisée en ce que** la composition présente en plus 10% en poids à 40% en poids d'au moins un polymère poisseux (tackifiant), par rapport au poids total de la composition.

10. Composition adhésive thermofusible réactive selon l'une des revendications 1 à 9, **caractérisée en ce que** la composition contient en plus 10% en poids à 40% en poids d'au moins une charge, par rapport au poids total de la composition.

11. Procédé pour la préparation d'une composition adhésive thermofusible réactive selon l'une des revendications 1 à 10, comprenant les étapes :
(a) ajout d'au moins un polymère à base de résine acrylate à au moins un composé chimique liquide à au moins 100°C, dans lequel ledit au moins un polymère à base de résine acrylate se dissout à au moins 150°C, ou ajout à un mélange qui contient ledit au moins un composé chimique, à une température dans la plage de 130°C à 170°C ;
(b) refroidissement du mélange à une température dans la plage de 80°C à 120°C ;
(c) ajout d'au moins un polymère organique terminé par alpha-silane au mélange refroidi ;
(d) ajout d'au moins un silane à bas poids moléculaire, qui présente un groupe amino primaire ou secondaire ou un groupe amino bloqué, qui s'hydrolyse en ledit groupe amino primaire ou secondaire, une composition adhésive thermofusible réactive selon l'une des revendications 1 à 10 étant obtenue.

12. Procédé selon la revendication 11, **caractérisé en ce qu'**en outre un polymère poisseux est ajouté dans l'étape (a).

13. Procédé selon la revendication 11 ou 12, **caractérisé en ce qu'**au moins une charge est ajoutée en plus dans l'étape (c).

14. Procédé selon l'une des revendications 11 à 13, **caractérisé en ce que** les étapes (c) et (d) se succèdent et qu'un dégazage est effectué entre les étapes.

15. Procédé pour le contrecollage surfacique, contenant l'étape de
- application d'une composition adhésive thermofusible réactive selon l'une des revendications 1 à 10 sur un substrat à l'aide d'un cylindre d'application.
